# NEUE EUROPÄISCHE PATENTSCHRIFT

(11) **EP 0 209 084 B2**
(45) Veröffentlichungstag und Bekanntmachung des Hinweises auf die Entscheidung über den Einspruch: **22.05.1996**
(45) Hinweis auf die Patenterteilung: 27.09.1989
(21) Anmeldenummer: 86109453.0
(22) Anmeldetag: 10.07.1986
(51) Int. Cl.: C09K 3/14, B24D 3/00

(54) **Verfahren zum Herstellen eines keramischen, polykristallinen Schleifmittels**
Process for preparing ceramic polycrystalline abrasives
Procédé de préparation d'abrasifs polycristallins céramiques

(30) Priorität: 15.07.1985 DE 3525175
(43) Veröffentlichungstag der Anmeldung: 21.01.1987
(73) Patentinhaber: Hermes Schleifmittel GmbH & Co., D-22547 Hamburg (DE)
(72) Erfinder: Bartels, Gunter, Dipl.-Ing., D-2057 Reinbek (DE); Becker, Günter, Dr.-Ing., D-2000 Hamburg 56 (DE); Wagner, Eckhard, Dipl.-Ing., D-2200 Elmshorn (DE)
(74) Vertreter: Glawe, Delfs, Moll & Partner

(56) Entgegenhaltungen:
- EP-A- 0 024 099
- EP-A- 0 152 768
- DD-A- 76 485
- US-A- 3 454 385
- US-A- 4 314 827
- US-A- 4 543 107
- Science of Ceramic Chemical Processing, Ed. L.L. Hench et al., New York, 1986, S. 247-271
- J. Am. Ceram. Soc., Band 69, Nr. 5, Mai 1986, S. C98-C100
- J. Am. Ceram. Soc., Band 67, Nr. 12, Dezember 1984, S. C230-C231

## Beschreibung

Die Erfindung bezieht sich auf ein Verfahren zum Herstellen eines keramischen, polykristallinen, Alpha-Aluminiumoxid und Magnesiumspinell enthaltenden Korundschleifmittels durch Entwässern, Kalzinieren und Sintern einer Dispersion, die eine Aluminiumhydroxid enthaltende erste Vorstufe sowie Magnesium in einer in Spinell umwandelbaren Form umfaßt.

Neben geschmolzenen Korundschleifmitteln sind solche aus gesintertem Material bekannt, die bestimmte herstellungstechnische und schleiftechnische Vorteile aufweisen. Insbesondere lassen sich ihre mikrokristalline Struktur und Zusammensetzung zur Beeinflussung von Zähigkeit und Härte sowie die tribophysikalischen Eigenschaften vergleichsweise gut beeinflussen.

Um eine möglichst große Härte zu erreichen, bevorzugt man ein möglichst feinkörniges Kristallgefüge.

Dabei haben sich bisher überwiegend solche Schleifmittel durchgesetzt, die zu einem maßgebenden Anteil neben Aluminiumoxid aus Zirkondioxid bestehen, wobei die Zirkondioxidkristalle eingebettet sind in eine aus Aluminiumoxid bestehende Matrix (EP-B 0 024 099 = US-A 4 314 827, Examples 1-11); Schleifmittel, die in solcher Weise aus unterschiedlichen Kristalliten zusammengesetzt sind, zeigen im allgemeinen bessere Eigenschaften als solche, die ausschließlich aus dem einen oder dem anderen Werkstoff bestehen, was mit der Feststellung zusammenhängen mag, daß ein disperses System der Mikrorißausbreitung größeren Widerstand entgegensetzt als ein sehr einheitliches Gefüge. Jedoch hat die Zusammensetzung der Schleifkörner aus Kristalliten unterschiedlicher Substanz auch Nachteile, die u. a. auf dem unterschiedlichen Wärmedehnungsverhalten der jeweiligen Kristallite sowie auf den vergleichsweise hohen Kosten von Zirkondioxid beruhen. In wissenschaftlichen Arbeiten ohne Bezug auf Schleifmittel (J.L. Mc Ardle : Poster presented Feb. 1985, Palm Coast, FL) ist auch schon die Wirkung von Gamma-Aluminiumoxid als Keimbildner für die Umwandlung in Alpha-Aluminiumoxid untersucht worden. Jedoch wurde festgestellt, daß die Dichte und Kornfeinheit des Endprodukts dadurch in nur geringerem Maße beeinflußt werden können, als durch Alpha-Aluminiumoxid.

Bekannt ist auch der zusatz von Spinellbildnern wie Magnesium (EP-B 0 024 099 = US-A 4 314 827, Examples 12-40), die das Kornwachstum hemmen.

Der Erfindung liegt die Aufgabe zugrunde, ein Verfahren der eingangs genannten Art zu schaffen, das zu einem Schleifmittel führt, das verbesserte Schleifeigenschaften, insb. eine verbesserte Härte aufweist.

Die erfindungsgemäße Lösung besteht darin, daß die Dispersion, die die Ausgangsbasis des Herstellungsverfahrens bildet, neben Aluminiumhydroxid eine zweite, Gamma-Aluminiumoxid enthaltende Vorstufe umfaßt.

Zwischen Gamma-Aluminiumoxid und Spinell besteht eine enge Kristallographische Verwandtschaft.

Dies wird bein erfindungsgemäßen Vorgehen genutzt, indem bereits in der Dispersion Gamma-Alminiumoxid und Magnesiumionen zusammengebracht werden, wodurch sie schon bei niedrigen Temperaturen und in gleichmäßiger Verteilung miteinander reagieren und Spinell bilden können.

Zwar befinden sich auch bei bekannten Verfahren, bei denen Alpha-Aluminiumoxid durch Kalzination von Aluminiumhydroxid unter Zusatz von Magnesium erzeugt wird, in einer bestimmten Temperaturstufe nebeneinander Gamma-Aluminiumoxid und Magnesiumionen in der Masse. Jedoch gilt dieses dort nur in einer eng begrenzten Phase des Kalzinierens, nämlich im Temperaturbereich zwischen 450°C und 800°C, bevor dann bei weiterer Steigerung der Temperatur Delta- bzw. Alpha-Aluminiumoxid entsteht. Im Gegensatz zum erfindungsgemäßen Vorgehen steht also nur ein sehr kurzer Zeitraum für die Spinellbildung zur Verfügung, wobei durch von Korn zu Korn unterschiedliche Temperatur-, Konzentrations- und Entwässerungszustände die Gleichmäßigkeit der Reaktion beeinträchtigt wird.

Es ist anzunehmen, daß die hochreaktive Gamma-Aluminiumoxid-Vorstufe sowohl als Keim als auch als Reaktionspartner wirkt, nämlich einerseits für die Bildung von weiteren, daran wachsenden, feinkörnigen Gamma-Aluminiumoxid-Kristalliten, die sich anschließend entsprechend feinkörnig in Alpha-Aluminiumoxid-Kristallite umwandeln, und andererseits für Spinellkristallite.

Es hat sich ferner als besonders vorteilhaft die Möglichkeit herausgestellt, die Wirkung des der Dispersion zugegebenen Gamma-Aluminiumoxids als Reaktionspartner der Magnesiumionen für die Spinellbildung hinsichtlich verschiedener physikalischer Eigenschaften gezielt und genau auszuwählen, insbesondere hinsichtlich der für die Reaktivität maßgeblichen spezifischen Oberfläche und der Teilchengröße.

Das Ergebnis ist eine zuverlässig reproduzierbare, gleichmäßige Spinellverteilung, welche dann eine wirksame Begrenzung des Kristallitwachstums während des Sinterns bewirkt. Das erhaltene Schleifmittel zeigt einen sehr einheitlichen, polykristallinen Aufbau, wobei sich hinsichtlich der Kristallite eine sehr gleichmäßige Form- und Größenverteilung ergibt.

Obgleich die Wirkung sowohl des Magnesiums als auch des Gamma-Aluminiumoxids jeweils für sich bekannt war, konnte ein derart positives Ergebnis - ausgehend von den bekannten Eigenschaften beider Stoffe - nicht erwartet werden, weil der im Kalzinationsprozeß auftretende Synergismus zwischen dem der Dispersion zugegebenen Gamma-Aluminiumoxid und dem Spinellbildner in dieser Weise noch nicht bekannt und beobachtet worden war.

Der Begriff Aluminiumhydroxid soll im Zusammenhang mit der Erfindung sämtliche Formen der eigentlichen Hydroxide einschließlich aller wasserhaltigen Abbauformen sowie Aluminiumoxidhydroxide einschließen.

Das Magnesium wird zweckmäßigerweise vor oder bei der Mischung der beiden Vorstufen zugegeben. In jedem Fall wird es den Dispersionen in einer für die Ausflockung und Gelbildung geeigneten Form, beispielsweise als Nitrat, zugegeben.

Der Magnesiumgehalt aller Vorstufen ist vorteilhafterweise so gewählt, daß sich im gesinterten Produkt ein molares Verhältnis von MgO zu Al₂O₃ von mindestens 0,1 ergibt.

Es hat sich herausgestellt, daß das erfindungsgemäße Verfahren nicht nur für die verhältnismäßig niedrigen, bekannten Spinellgehalte im Schleifmittel, sondern auch für wesentlich höhere geeignet ist. So ergibt sich ein Produkt mit sehr guten Schleifeigenschaften dann, wenn der Magnesiumgehalt aller Vorstufen zusammen einem Magnesiumaluminatspinellgehalt des gesinterten Produkts von mindestens 50 Gew.-% entspricht, vorzugsweise sogar von mindestens 70 Gew.-%. Es kann sogar im wesentlichen das gesamte Produkt in Spinellform erzeugt werden.

Das für die weitere Vorstufe verwendete Gamma-Aluminiumoxid ist zweckmäßigerweise ein kalziniertes Aluminiumhydroxid, wobei das als Ausgangsstoff verwendete Aluminiumhydroxid übereinstimmen kann mit dem der ersten Vorstufe. Insbesondere wird ein zu metastabilem Gamma-Aluminiumoxid zwischen 450°C und 900°C, vorzugsweise zwischen 550°C und 850°C kalziniertes Aluminiumhydroxid verwendet, das zweckmäßigerweise ausgehend von einem Böhmit-Typ gewonnen wurde. Die weitere Vorstufe kann vorzugsweise ausschließlich aus diesem Material bestehen oder auch zusätzliche Aluminiumhydroxide oder andere Stoffe enthalten.

Das in der weiteren Vorstufe enthaltene Magnesium liegt nach der Kalzination in der Form von Spinell oder einer Vorform von Spinell vor, wobei zuvor zunehmend eine Durchdringuhg von Gamma-Aluminiumoxid durch Magnesiumionen dank der kristallographischen Ähnlichkeit von Magnesiumspinell und Gamma-Aluminiumoxid zustande gekommen ist.

Die weitere Vorstufe wird in der ersten Vorstufe zweckmäßigerweise dispergiert, bevor der Gel-Zustand erreicht wird.

Statt dessen ist es aber auch möglich, ein Sol oder Gel der ersten Vorstufe mit der weiteren Vorstufe als Dispersion zu mischen. Wenn für die weitere Vorstufe ein kalziniertes Aluminiumhydroxid verwendet wird, wird dies nach dem Kalzinieren zweckmäßigerweise fein gemahlen, da die Korngröße des Kalzinats sich auf die Größe der Kristallite im Endprodukt auswirkt.

Die erste und die weitere Vorstufe werden zweckmäßigerweise in einem solchen Verhältnis gemischt, daß ihre wasserfrei gemessenen Aluminiumoxidgehalte im Verhältnis von 99:1 bis 80:20, vorzugsweise von 97,5:2,5 bis 90:10 zueinander stehen.

Das aus den beiden Vorstufen gewonnene Gel wird in eine zum Trocknen geeignete Gestalt gebracht, beispielsweise in Tafelform. Sehr zweckmäßig kann es auch sein, es zu extrudieren, und zwar vorteilhafterweise in einem dem gewünschten Schleifkornquerschnitt entsprechenden Rohquerschnitt. Das Gel wird im Rahmen üblicher Techniken schonend getrocknet. Weitere Entwässerungsmethoden können vor der Gelbildung angewandt werden, beispielsweise kann die Dispersion zentrifugiert werden. Dies braucht nicht erst nach dem Zusammenfügen der beiden Vorstufen zu geschehen; vielmehr können diese auch gesondert dispergiert und teilentwässert werden, bevor sie in noch flüssiger oder pastöser Form, beispielsweise im Extruder, gemischt werden.

Das Erreichen des Gelzustandes ist nach Zusammenfügen der ersten mit der weiteren Vorstufe anzustreben. Das Trockengel kann gebrochen werden und unter Berücksichtigung des Schwindmaßes für das anschließende Kalzinieren und Sintern durch Vorsieben größenklassiert werden. Das anfallende Restgel kann unter Zugabe von Wasser wieder zu einer Dispersion aufbereitet werden, die dem Prozeß erneut zugeführt werden kann. Das vorgesiebte, körnige Trockengel wird im Temperaturbereich zwischen 450°C und 900°C, vorzugsweise zwischen 550°C und 850°C, ca. eine Stunde kalziniert. Das kalzinierte Korn kann direkt oder nach Zwischenabkühlung auf 20°C bis 50°C in den über 1250°C, vorzugsweise zwischen 1350°C und 1450°C aufgeheizten Sinterofen gegeben und dort während einer Verweildauer von 5 bis 90 Minuten, vorzugsweise 20 bis 60 Minuten, gesintert werden. Wenn das kalzinierte Gut zwischengekühlt wird, kann das Brechen und Größenklassieren auch in dieser Verfahrensstufe (statt nach dem Trocknen des Gels) durchgeführt werden. Das gesinterte Schleifkorn wird zweckmäßigerweise rasch abgekühlt und nach dem Abkühlen auf Raumtemperatur nach Form und Normgröße durch Sieben oder Sedimentieren klassiert.

Die oben angegebenen Verfahrensparameter können analog dem reichen Erfahrungsschatz des Standes der Technik modifiziert werden.

Zum Ansetzen der Dispersionen verwendet man zweckmäßigerweise handelsübliches, gut dispergierbares, hochreines Aluminiumoxidhydroxid vom Böhmit-Typ mit maximal 0,025% SiO₂, 0,02% Fe₂O₃ und 0,005% Na₂O. Die Sol/Gel-Bildung sowie die Feinkristallinität des Produkts wird gefördert durch eine große spezifische Oberfläche, die zweckmäßigerweise über 100 m/g, vorzugsweise über 150 m/g, liegt.

Das Dispergieren und die Sol/Gel-Bildung kann durch die üblichen Mittel gefördert werden, beispielsweise durch Verwendung von 50-70%-iger Salpetersäure.

Das erfindungsgemäße Schleifmittel schließt nicht das Vorhandensein von Mikroporen aus, wenn diese im Hinblick auf die Zähigkeit zweckmäßig erscheinen. Das erfindungsgemäße Schleifmittel kann in herkömmlicher Weise allein oder vermischt mit anderen Schleifmitteln, beispielsweise Elektrokorund-Schleifmittel, zu Schleifwerkzeugen verarbeitet werden.

Es kann jedoch auch unverarbeitet oder nach Zerkleinerung bzw. Agglomeration als Strahlmittel oder in flüssiger oder in Pastenform für Schleif- oder Polierzwecke eingesetzt werden.

## Patentansprüche

1. Verfahren zum Herstellen eines keramischen, polykristallinen, Alpha-Aluminiumoxid und Magnesiumspinell enthaltenden Schleifmittels durch Entwässern, Kalzinieren und Sintern einer Dispersion, die eine Aluminiumhydroxid enthaltende erste Vorstufe sowie Magnesium in einer in Spinell umwandelbaren Form umfaßt, dadurch gekennzeichnet, daß die Dispersion eine zweite, Gamma-Aluminiumoxid enthaltende Vorstufe umfaßt.

2. Verfahren nach Anspruch 1, dadurch gekennzeichnet, daß der Magnesiumgehalt der Dispersion einem molaren Verhältnis von MgO zu Al₂O₃ im gesinterten Produkt von mindestens 0,1 entspricht.

3. Verfahren nach Anspruch 2, dadurch gekennzeichnet, daß der Magnesiumgehalt der Dispersion einem Spinellgehalt des gesinterten Produkts von mindestens 50 Gew.% entspricht.

4. Verfahren nach Anspruch 3, dadurch gekennzeichnet, daß der Magnesiumgehalt der Dispersion einem Spinellgehalt des gesinterten Produkts von mindestens 70 Gew.% entspricht.

5. Verfahren nach einem der Ansprüche 1 bis 4, dadurch gekennzeichnet, daß nur eine der beiden Vorstulen Magnesium enthält.

6. Verfahren nach einem der Ansprüche 1 bis 5, dadurch gekennzeichnet, daß die weitere Vorstufe Magnesium enthält.

7. Verfahren nach Anspruch 6, dadurch gekennzeichnet, daß die weitere Vorstufe durch gemeinsame Kalzination von Aluminiumhydroxid mit dem Spinellbildner gewonnen wird.

8. Verfahren nach Anspruch 7, dadurch gekennzeichnet, daß die Kalzination zwischen 450°C und 900°C durchgeführt wird.

9. Verfahren nach Anspruch 8, dadurch gekennzeichnet, daß die Kalzination zwischen 550°C und 850°C durchgeführt wird.

10. Verfahren nach einem der Ansprüche 7 bis 9, dadurch gekennzeichnet, daß für die Herstellung der weiteren Vorstufe Böhmit verwendet wird.

11. Verfahren nach einem der Ansprüche 1-10 dadurch gekennzeichnet, daß die weitere Vorstufe vor der Mischung mit der ersten gemahlen wird.

12. Verfahren nach einem der Ansprüche 1 bis 11 dadurch gekennzeichnet, daß die erste Vorstufe mit der weiteren Vorstufe in einem solchen Verhältnis gemischt wird, daß ihre wasserfreien Aluminiumoxidgehalte im Verhältnis von 99:1 bis 80:20; vorzugsweise von 97,5:2,5 bis 90:10, zueinander stehen.

## Claims

1. A method for the production of an abrasive containing ceramic, polycrystalline, alpha-alumina and magnesium spinel by de-watering, calcining and sintering a dispersion which comprises a first preliminary phase containing an aluminium hydroxide and magnesium in a form which can be converted into spinel, characterised in that the dispersion comprises a second preliminary phase containing gamma-alumina.

2. A method according to Claim 1, characterised in that the magnesium content of the dispersion corresponds to a molar ratio of MgO to Al₂O₃ in the sintered product of at least 0.1.

3. A method according to Claim 2, characterised in that the magnesium content of the dispersion corresponds to a spinel content of the sintered product of at least 50 % by weight.

4. A method according to Claim 3, characterised in that the magnesium content of the dispersion corresponds to a spinel content of the sintered product of at least 70 % by weight.

5. A method according to any one of Claims 1 to 4, characterised in that only one of the two preliminary phases contains magnesium.

6. A method according to any one of Claims 1 to 5, characterised in that the further preliminary phase contains magnesium.

7. A method according to Claim 6, characterised in that the further preliminary phase is obtained by combined calcination of aluminium hydroxide with the spinel former.

8. A method according to Claim 7, characterised in that the calcination is carried out between 450°C and 900°C.

9. A method according to Claim 8, characterised in that the calcination is carried out between 550°C and 850°C.

10. A method according to any one of Claims 7 to 9, characterised in that boehmite is used for the preparation of the further preliminary phase.

11. A method according to any one of Claims 1 to 10, characterised in that the further preliminary phase is ground prior to being mixed with the first preliminary phase.

12. A method according to any one of Claims 1 to 11, characterised in that the first preliminary phase is mixed with the further preliminary phase in a ratio such that their non-aqueous aluminium oxide contents are in a ratio to one another of from 99 : 1 to 80 : 20, preferably from 97.5 : 2.5 to 90 : 10.

## Revendications

1. Procédé de fabrication d'un abrasif polycristallin céramique contenant de l'oxyde d'aluminium α et du spinelle de magnésium, par déshydratation, calcination et frittage d'une dispersion qui comprend un premier progéniteur contenant de l'hydroxyde d'aluminium ainsi que du magnésium sous une forme transformable en spinelle, caractérisé en ce que la dispersion comprend un second progéniteur contenant de l'oxyde d'aluminium γ.

2. Procédé selon la revendication 1, caractérisé en ce que en ce que la teneur en magnésium de la dispersion correspond à un rapport molaire de MgO à Al₂O₃ dans le produit fritté d'au moins 0,1.

3. Procédé selon la revendication 2, caractérisé en ce que la teneur en magnésium de la dispersion correspond à une teneur en spinelle du produit fritté d'au moins 50% en poids.

4. Procédé selon la revendication 3, caractérisé en ce que la teneur en magnésium de la dispersion correspond à une teneur en spinelle du produit fritté d'au moins 70% en poids.

5. Procédé selon l'une quelconque des revendications 1 à 4, caractérisé en ce qu'un seul des deux progéniteurs contient du magnésium.

6. Procédé selon l'une quelconque des revendications 1 à 5, caractérisé en ce que le progéniteur supplémentaire contient du magnésium.

7. Procédé selon la revendication 6, caractérisé en ce que le progéniteur supplémentaire est obtenu par calcination commune d'hydroxyde d'aluminium avec le générateur de spinelle.

8. Procédé selon la revendication 7, caractérisé en ce que la calcination est effectuée entre 450°C et 900°C.

9. Procédé selon la revendication 8, caractérisé en ce que la calcination est effectuée entre 550°C et 850°C.

10. Procédé selon l'une quelconque des revendications 7 à 9, caractérisé en ce que de la boehmite est utilisée pour la préparation du progéniteur supplémentaire.

11. Procédé selon l'une quelconque des revendications 1 à 10, caractérisé en ce que le progéniteur supplémentaire est broyé avant son mélange avec le premier progéniteur.

12. Procédé selon l'une quelconque des revendications 1 à 11, caractérisé en ce que le premier progéniteur est mélangé avec le progéniteur supplémentaire dans un rapport tel que leurs teneurs en oxyde d'aluminium anhydre se situent entre elles dans un rapport de 99 : 1 à 80 : 20, de préférence de 97,5 : 2,5 à 90 : 10.
